# EUROPEAN PATENT APPLICATION

(11) **EP 1 522 460 A1**
(43) Date of publication of application: **13.04.2005**
(21) Application number: 04077608.0
(22) Date of filing: 20.09.2004
(51) Int. Cl.: B60R 1/00, B60Q 1/48, G08G 1/16

(54) **Parking assist system**

(30) Priority: 07.10.2003 US 680466
(71) Applicant: Delphi Technologies, Inc., Troy, MI 48007 (US)
(72) Inventor: Taylor, Ronald M., Greentown, IN 46936 (US); Harter Jr., Joseph E., Kokomo, IN 46902 (US); Scharenbroch, Gregory K., Kokomo, IN 46901 (US); Pawlowski, Michael, Carmel, IN 46032-5102 (US); Ray, Michael S., Carmel, IN 46032 (US)
(74) Representative: Denton, Michael John

(57) **Abstract**

A back-up system (100) for aiding a driver in backing a motor vehicle (10) performs a number of functions when a motor vehicle (10) is placed in a reverse direction. Initially, an image of an area at the rear of the motor vehicle (10) provided by a camera (140) is visually displayed on a monitor (120), which is positioned so as to be visually accessible by a driver of the motor vehicle (10). Then, a distance to an object that is within a path of the motor vehicle (10) is sensed with a radar sensor (124). Next, a warning is provided when the object is within a predetermined collision distance. Finally, when the motor vehicle (10) is placed in a forward direction, the display of the image on the monitor (120) is discontinued.

## Description

### Technical Field

The present invention is generally directed to an automotive system and, more specifically, a back-up system for a motor vehicle.

### Background of the Invention

Today, motor vehicle manufacturers are increasingly installing safety devices in vehicles to enable drivers to drive in a safer more efficient manner. For example, some manufacturers have included forward looking systems (FLSs), rear detection systems (RDSs) and side detection systems (SDSs) within certain vehicle models. An adaptive cruise control (ACC) system is one example of an FLS. The ACC system uses a radar sensor mounted at the front of the vehicle to detect objects in a forward path of the vehicle. If the lane ahead is clear, the ACC system maintains a set vehicle speed. However, when a slower vehicle is detected, the ACC system maintains a driver-selected distance using throttle control and limited breaking between the vehicles. A typical ACC system uses mechanically scanned radar sensors, which normally improves the ability of the system to detect targets, e.g., vehicles in heavy traffic. A typical commercially available ACC system has a range of 150 meters and azimuth of 15 degrees and updates at a 10 hertz rate. An ACC system generally determines a range of a detected object, as well as the relative speed of the detected object.

SDSs detect objects that are at the side of a vehicle, e.g., in a driver's blind spot. A typical SDS includes a radar sensor that is mounted in each rear quarter panel of the vehicle. Each radar sensor is designed to detect objects in an adjacent lane. In this manner, the SDS can provide a visual indication to the driver to warn of objects in the driver's blind spot.

An example of an RDS is a back-up aid (BUA) or a reverse sensing system. BUAs are typically used as short range parking aids and include visual and audible alarms to warn a driver of an impending collision. A typical BUA system includes a radar sensor that provides a rear detection range of up to 6 meters. Some BUAs also include ultrasonic sensors that provide bumper coverage. A typical BUA is activated when a vehicle is put into reverse gear and is useful for parking, parallel parking, backing in and out of parking spaces and backing at higher speeds.

Video systems are also increasingly being installed in motor vehicles. For example, one proposed BUA incorporates a camera in conjunction with ultrasonic sensors mounted in a bumper of a motor vehicle. In this system, a video display is positioned within the motor vehicle to allow monitoring of an area at a rear of the motor vehicle to be monitored by a driver. That is, a rear facing camera is mounted at a back of a motor vehicle such that when the vehicle is placed in a reverse gear, a video display is activated to allow the driver to see obstacles which might not otherwise be visible. However, such systems generally require multiple ultrasonic sensors, which are somewhat limited in range and the camera and the ultrasonic sensors generally cover the same area.
What is needed is a back-up system for a motor vehicle that provides video images of an area at a rear of the motor vehicle and warns the driver of potential dangerous situations at increased distances allowing the driver to make a determination from viewing the display as to whether a detected obstacle presents a hazard to the motor vehicle.

### Summary of the Invention

The present invention is directed to a technique for aiding a driver in backing a motor vehicle. Initially, placement of the motor vehicle in a reverse direction is detected and an image of an area at the rear of the motor vehicle is visually displayed on a monitor, which is positioned so as to be visually accessible by a driver of the motor vehicle. Then, a distance to an object that is within a path of the motor vehicle is sensed with a radar sensor. Next, a warning is provided when the object is within a predetermined collision distance. Finally, when the motor vehicle is placed in a forward direction, the display of the image on the monitor is discontinued.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is an electrical block diagram of an exemplary back-up system for a motor vehicle; and
Fig. 2 is a perspective view of an exemplary motor vehicle showing the positioning of various components of the back-up system of Fig. 1.

### Description of the Preferred Embodiments

According to an embodiment of the present invention, a back-up system for a motor vehicle includes a camera, a processor, a monitor, a radar sensor and a memory subsystem and may include vibrational devices located in a driver's seat at various locations. The camera is positioned to view an area at the rear of the motor vehicle and is coupled to the processor. The monitor displays images provided by the camera and is also coupled to the processor. The radar sensor, which is coupled to the processor, provides signals that are used to sense a distance to an object that is within a rear path of the motor vehicle, when the motor vehicle is placed in a reverse direction.

The memory subsystem, which includes an application appropriate amount of volatile and non-volatile memory, stores code that, when executed by the processor, causes the processor to perform a number of steps. Initially, the processor detects whether the motor vehicle is placed in a reverse direction. Next, the processor causes an image of the area at the rear of the motor vehicle to be visually displayed on the monitor, which is positioned to be visually accessible by a driver of the motor vehicle. The processor causes a warning to be provided when the object is within a predetermined collision distance. Upon detecting that the motor vehicle is placed in a forward direction, the processor may cause the display of the image to be discontinued so as to not distract a driver of the motor vehicle.

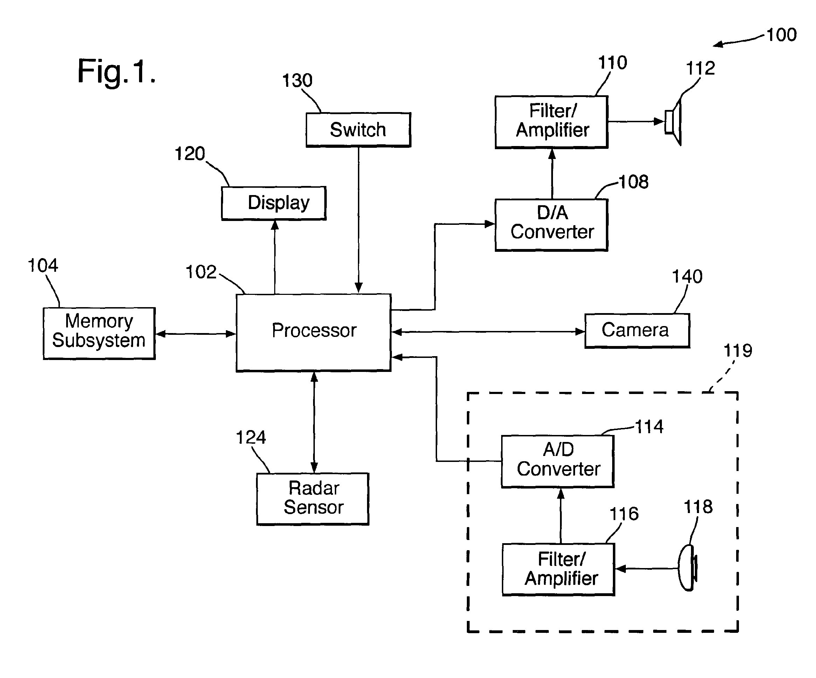

Fig. 1 depicts a block diagram of an exemplary back-up system 100 that is implemented within a motor vehicle that detects when the motor vehicle is placed in a reverse direction, i.e., a reverse gear. As shown, the system 100 includes a processor 102 coupled to a radar sensor 124, e.g., a 17 GHz radar sensor or a 24 GHz radar sensor, a switch 130 that provides an indication when the motor vehicle is shifted to a reverse gear and a display/monitor 120. The processor 102 is also coupled to and may control a camera 140 based upon a direction of travel. That is, the processor 102 may cause the camera 140 to capture images at a rear of the motor vehicle when the motor vehicle is traveling in a reverse direction.

The processor 102 controls audio content provided to a listener, via the speaker 112 and may also supply various information to a user, via the display 120 and/or the speaker 112. As used herein, the term processor may include a general purpose processor, a microcontroller (i.e., an execution unit with memory, etc., integrated within a single integrated circuit), an application specific integrated circuit (ASIC), a programmable logic device (PLD) or a digital signal processor (DSP). The processor 102 is also coupled to a memory subsystem 104, which includes an application appropriate amount of memory (e.g., volatile and non-volatile memory), which provides storage for various routines that may be used to visually display images at a rear of a motor vehicle. The memory subsystem 104 may also provide a storage area for one or more speech recognition applications.

As is also shown in Fig. 1, an audio input device 118 (e.g., a microphone) is coupled to a filter/amplifier module 116. The filter/amplifier module 116 filters and amplifies the voice input provided by a user through the audio input device 118. This voice input may be utilized to control various automotive accessories positioned in/on the motor vehicle. The filter/amplifier module 116 is also coupled to an analog-to-digital (A/D) converter 114, which digitizes the voice input from the user and supplies the digitized voice to the processor 102 which may execute a speech recognition application, which causes the voice input to be compared to system recognized commands. In general, the audio input device 118, the filter/amplifier module 116 and the A/D converter 114 form a voice input circuit 119.

The processor 102 may execute various routines in determining whether the voice input corresponds to a system recognized command and/or a specific operator. The processor 102 may also cause an appropriate output, e.g., a warning tone or synthesized voice warning to be provided to the user through an audio output device 112. The synthesized voice output is provided by the processor 102 to a digital-to-analog (D/A) converter 108. The D/A converter 108 is coupled to a filter/amplifier section 110, which amplifies and filters the analog voice output. The amplified and filtered output is then provided to audio output device 112 (e.g., a speaker). In addition, or alternatively, the processor may activate vibratory devices (not shown) located within a driver's seat to provide an indication of a location of a sensed object.

The processor 102 is also coupled to a camera 140, which allows the system 100 to capture an image at a rear of its associated motor vehicle. As discussed above, the camera may be activated when the motor vehicle is placed in a reverse gear. The camera 140 may be, for example, a charge-coupled device (CCD) or a CMOS device. The camera 140 implements a wide field of view lens to capture objects that are near to the motor vehicle and relatively close to the bumper of the motor vehicle.

In a typical situation, a back-up lamp provided by the motor vehicle will provide sufficient illumination for a standard color or black and white CMOS/CCD VGA resolution camera to operate properly at night. Use of an existing back-up lamp avoids the need to add additional lighting to see near objects adequately. Audible and/or visual warnings may be presented to the driver on a display screen mounted in close proximity to the driver. In general, at relatively low vehicle speeds, which are involved in parking maneuvers, the camera allows the driver to inspect the scene directly behind the motor vehicle by viewing the display image of the area immediately behind the motor vehicle. In the case of parking, the driver is already anticipating stopping but needs to decide where to stop as well as avoiding other objects. In reversing the motor vehicle at faster speeds for objects that the driver may not see, the longer range radar sensor provides an additional reaction/warning time that is desirable when the driver is operating the vehicle without looking at the display. It should be appreciated that the longer range information can be cued, i.e., indicated via a marker or token, to the video display to provide additional contextual information as an adjunct to the video image if and when a warning is given.

When the reversing function is complete and the vehicle is switched into a non-reverse gear, the display can be muted, if desired, to minimize driver distraction issues. If desired, the video monitor, which provides live video images, may also include integrated speakers for audible warnings and have controls to provide color, brightness and volume adjustment, as well as power and video inputs. A typical liquid crystal diode (LCD) thin film transistor (TFT) monitor of approximately a 5-inch diagonal provides an adequate monitor.

A back-up system configured according to the present invention eliminates the integration difficulties that are inherent in ultrasonic based parking aid systems while providing additional information to the driver while parking. Systems that implement a radar sensor provide a longer range object detection capability than systems that implement ultrasonic sensors, which have required physical holes in a bumper of the motor vehicle to operate properly and have required multiple sensors to cover the entire motor vehicle's rear bumper area. It should be appreciated that additional information that may be provided on the display/monitor may include an accurate range indication superimposed on the video image, which can help to illustrate objects that might otherwise be viewed as a false alarm, for example, an edge of a garage door or objects nearly in the motor vehicle's path. It should also be appreciated that the rear facing camera may be implemented in systems that include additional cameras for viewing other areas, for example, a front and side, around the motor vehicle.

According to another embodiment of the present invention, directional audible queuing via, for example, a four speaker audio, provides a driver with an audio signal representative of object positioning. According to still another embodiment of the present invention, haptic cuing may be provided via a directional vibrating driver's seat so as to provide physical reinforcement regarding an object's position. It should be appreciated that such systems may eliminate the need for elderly drivers to perform over-the-shoulder checks. Further, graphic representation/identification of objects in a video display is an efficient, intuitive and valuable technique for presenting back-up scenario information. Object range information may be provided coupled with display of the objects to provide drivers with distance and identification of an in-path object. It should be appreciated that systems that implement a radar sensor and a video display provide an added measure of safety while backing up, which is particularly important in vehicles, for example, large recreational vehicles (RVs) and delivery trucks, which do not generally offer the driver a direct view of the vehicle's rear end.

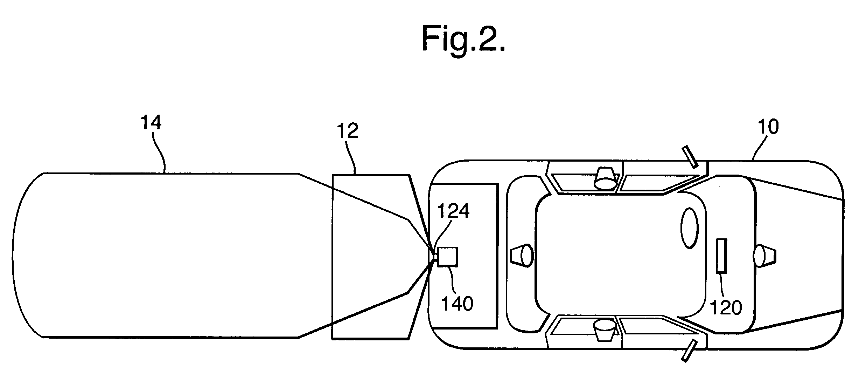

With reference to Fig. 2, a motor vehicle 10 is shown that includes a radar sensor 124 that emits a pattern 14 and a camera 140 that views an area 12 at a rear of the motor vehicle 10. In a typical case, the radar sensor provides coverage up to about 16.4 feet from the rear of the motor vehicle 10 and the camera 140 provides detailed coverage up to about 5 feet from the rear of the motor vehicle. As is also shown in Fig. 2, the motor vehicle 10 includes a display 120 mounted within the vehicle 10 and positioned such that a driver of the motor vehicle 10 can view the display 120. It should be appreciated that the display 120 may be a multiple purpose display. For example, the display 120 can function to display images at the rear of the motor vehicle 10 and display navigation maps in motor vehicles implementing navigation systems.

Accordingly, a back-up system has been described herein that advantageously provides alerts to a driver of objects within a rear path of a motor vehicle, as well as providing a video image of an area at the rear of the motor vehicle. The back-up system includes a camera that provides real-time video for near range detection and a radar sensor for longer range detection.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method for aiding a driver in backing a motor vehicle (10), comprising the steps of:
detecting when a motor vehicle (10) is placed in a reverse direction;
visually displaying an image of an area at a rear of the motor vehicle (10) provided by a camera (140) on a monitor (120) when the motor vehicle (10) is placed in the reverse direction, wherein the monitor (120) is positioned to be visually accessible by a driver of the motor vehicle (10);
sensing a distance to an object that is within a path of the motor vehicle (10) with a radar sensor (124) when the motor vehicle (10) is placed in the reverse direction;
providing a warning when the object is within a predetermined collision distance; and
detecting when the motor vehicle (10) is placed in a forward direction, wherein the display of the image is discontinued when the motor vehicle (10) is placed in the forward direction.

2. The method of claim 1, further including the step of:
visually displaying a distance indicator on the monitor (120), wherein the distance indicator provides an indication of a distance to a sensed object when the motor vehicle (10) is placed in the reverse direction.

3. The method of claim 1, wherein the warning is an audible warning.

4. The method of claim 1, wherein the warning is one of a directional audible warning, a visual warning and a vibrational warning.

5. The method of claim 1, wherein the radar sensor (124) operates at about 17 GHz.

6. The method of claim 1, wherein the monitor (120) is a liquid crystal display (LCD).

7. The method of claim 1, wherein the radar sensor (124) provides coverage up to about 16.4 feet from the rear of the motor vehicle (10) and the camera (140) provides coverage up to about 5 feet from the rear of the motor vehicle (10).

8. A back-up system (100) for a motor vehicle (10), comprising:
a camera (140) located to view an area at a rear of a motor vehicle (10);
a processor (102) coupled to the camera (140);
a monitor (120) coupled to the processor (102), the monitor (120) displaying images provided by the camera (140);
a radar sensor (124) coupled to the processor (102), wherein the radar sensor (124) provides a radar signal that is used to sense a distance to an object that is within a path of the motor vehicle (10) when the motor vehicle (10) is placed in a reverse direction; and
a memory subsystem (104) coupled to the processor (102), the memory subsystem (104) storing code that when executed by the processor (102) causes the processor (102) to perform the steps of:
detecting when the motor vehicle (10) is placed in the reverse direction;
visually displaying an image of the area at the rear of the motor vehicle (10) on the monitor (120) when the motor vehicle (10) is placed in the reverse direction, wherein the monitor (120) is positioned to be visually accessible by a driver of the motor vehicle (10);
sensing a distance to an object that is within a path of the motor vehicle (10) with the radar sensor (124) when the motor vehicle (10) is placed in the reverse direction;
providing a warning when the object is within a predetermined collision distance; and
detecting when the motor vehicle (10) is placed in a forward direction, wherein the display of the image is discontinued when the motor vehicle (10) is placed in the forward direction.

9. The system (100) of claim 8, wherein the code when executed allows the processor (102) to perform the additional step of:
visually displaying a distance indicator on the monitor (120), wherein the distance indicator provides an indication of a distance to a sensed object when the motor vehicle (10) is placed in the reverse direction.

10. The system (100) of claim 8, wherein the warning is an audible warning.

11. The system (100) of claim 8, wherein the warning is one of a directional audible warning, a visual warning and a vibrational warning.

12. The system (100) of claim 8, wherein the radar sensor (124) operates at about 17 GHz.

13. The system (100) of claim 8, wherein the monitor (120) is a liquid crystal display (LCD)

14. The system (100) of claim 8, wherein the radar sensor (124) provides coverage up to about 16.4 feet from the rear of the motor vehicle (10) and the camera (140) provides coverage up to about 5 feet from the rear of the motor vehicle (10).

15. A back-up system (100) for a motor vehicle (10), comprising:
a camera (140) located to view an area at a rear of a motor vehicle (10);
a processor (102) coupled to the camera (140);
a monitor (120) coupled to the processor (102), the monitor (120) displaying images provided by the camera (140);
a radar sensor (124) coupled to the processor (102), wherein the radar sensor (124) provides a radar signal that is used to sense a distance to an object that is within a path of the motor vehicle (10) when the motor vehicle (10) is placed in a reverse direction;
a speaker (112) coupled to the processor (102); and
a memory subsystem (104) coupled to the processor (102), the memory subsystem (104) storing code that when executed by the processor (102) causes the processor (102) to perform the steps of:
detecting when the motor vehicle (10) is placed in the reverse direction;
visually displaying an image of the area at the rear of the motor vehicle (10) on the monitor (120) when the motor vehicle (10) is placed in the reverse direction, wherein the monitor (120) is positioned to be visually accessible by a driver of the motor vehicle (10);
sensing a distance to an object that is within a path of the motor vehicle (10) with the radar sensor (124) when the motor vehicle (10) is placed in the reverse direction;
providing an audible warning over the speaker (112) when the object is within a predetermined collision distance; and
detecting when the motor vehicle (10) is placed in a forward direction, wherein the display of the image is discontinued when the motor vehicle (10) is placed in the forward direction.

16. The system (100) of claim 15, wherein the code when executed allows the processor (102) to perform the additional step of:
visually displaying a distance indicator on the monitor (120), wherein the distance indicator provides an indication of a distance to a sensed object when the motor vehicle (10) is placed in the reverse direction.

17. The system (100) of claim 15, wherein the radar sensor (124) operates at about 17 GHz.

18. The system (100) of claim 15, wherein the monitor (120) is a liquid crystal display (LCD).

19. The system (100) of claim 15, wherein the radar sensor (124) provides coverage up to about 16.4 feet from the rear of the motor vehicle (10) and the camera (140) provides coverage up to about 5 feet from the rear of the motor vehicle (10).
